# EUROPEAN PATENT SPECIFICATION

(11) **EP 1 860 333 B1**
(45) Date of publication and mention of the grant of the patent: **20.08.2008**
(21) Application number: 06252764.3
(22) Date of filing: 26.05.2006
(51) Int. Cl.: F16B 27/00

(54) **Screw strip with ribs extending along full length thereof**
Schraubenband mit sich entlang seiner vollen Länge erstreckenden Rippen
Bande à vis avec rebords s'etendant sur toute la longueur

(43) Date of publication of application: 28.11.2007
(73) Proprietor: Kwantex Research Inc., Kuan Miao Hsiang, Tainan Hsien (TW)
(72) Inventor: Lin, Chao-Wei, Tainan City (TW)
(74) Representative: Charlton, Peter John

(56) References cited:
- DE-U1- 8 817 271
- DE-U1- 20 002 058
- DE-U1- 20 002 798
- US-A1- 2004 042 875

## Description

This invention relates to a screw holder, and more particularly to a screw strip for holding a plurality of screws thereon.

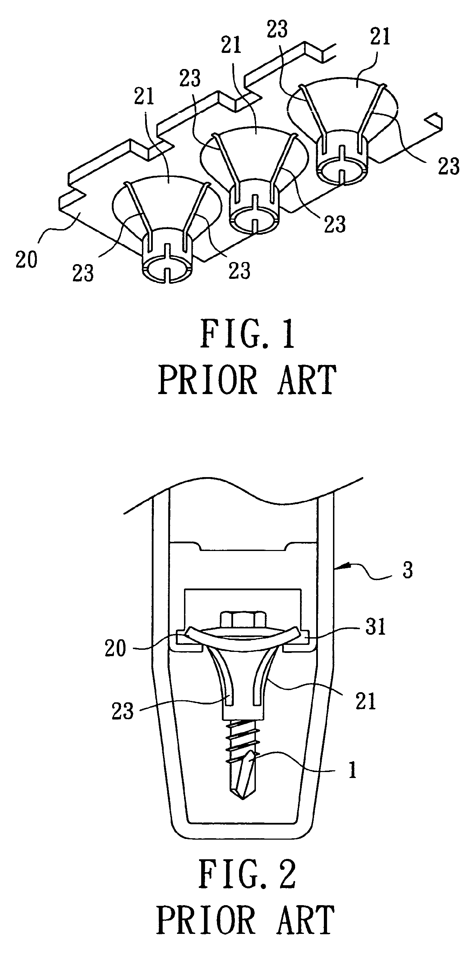

Referring to Fig. 1, a first conventional screw strip includes a strip body 20, and a plurality of sleeves 21 each formed with a plurality of slots 23. Referring to Fig. 2, a plurality of screws 1 can be clamped respectively within the sleeves 21. When one screw 1 is driven into a workpiece (not shown) by means of a pneumatic screw-driving device 3, the sleeve 21 is ruptured by a head of the screw 1. The pneumatic screw-driving device 3 is formed with two guide slots 31. Two opposite lateral sides of the strip body 20 can be moved within the guide slots 31 in the pneumatic screw-driving device 3. A drawback of the first conventional screw strip is that the screw-driving operation of the screw-driving device 3 may result in deformation of the strip body 20 into an arch shape due to separation of the opposite lateral sides of the strip body 20 from the guide slots 31, respectively. If this occurs, the screw 1 cannot be driven accurately into the workpiece.

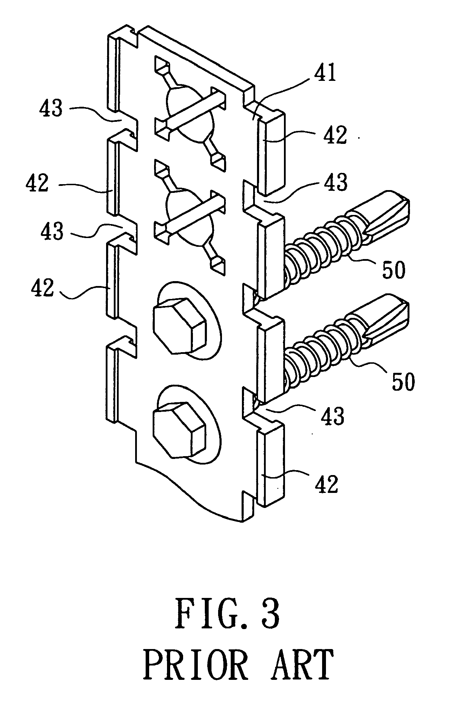

To provide an improvement over the first conventional screw strip, as shown in Fig. 3, each side of a second conventional screw strip is designed to have a plurality of spaced-apart wings 41 each formed with a short rib 42. Any two adjacent wings 41 define a notch 43. To use the second conventional screw strip, a pneumatic screw-driving device (not shown) includes two spring-biased positioning members slidable on the wings 41 and engageable with two selected ones of the notches 43, and two rib-engaging slots for sliding movement of the short ribs 42 therealong. Although the deformation of the second conventional screw strip can be diminished, when the screw-driving operation is performed, the short ribs 42 may separate from the rib-engaging slots in the pneumatic screw-driving device in view of the fact that any two adjacent short ribs 42 are divided by a corresponding one of the notches 43. As a result, it is still possible for the lateral sides of the second conventional screw strip to separate from the guide slots in the pneumatic screw-driving device.

WO-A-0156748 discloses to a magazine for a screwdriver. The magazine is provided with an adapted magazine strip and is used to store screws which can be successively inserted into and extracted from the objects provided. The magazine strip consists of a flat belt part and an enlargement running along the edges. The magazine comprises a guiding device which is made up of a guiding part with a guiding slit on each side of the magazine strip. The guiding part is dimensioned in such a way that the enlargement extends respectively in positive fit outside the guiding part when the belt piece is inserted into the guiding slit.

US2004-A-042875 discloses a screw strip which is formed as a long strip and has a plurality of receiving holes for receiving a plurality of screws. A periphery of each receiving hole has a plurality of radiated long slits. Two sides of the screw strip have a plurality of slots for pushing a nail gun there-through. Each of two sides of the screw strip has a plurality of flanges which is matched to the transfer guide groove of a nail gun. By the flanges, when the screw strip passes through the transfer guide groove of a nail gun, it can be positioned so as to prevent that the screw strip bends and deforms as the screws pass through the strip.

The object of this invention is to provide a screw strip that does not undergo deformation when a screw-driving operation is performed and that allows the screws held thereon to be driven accurately into a workpiece.

According to this invention, a screw strip is provided for holding a plurality of screws. The screws extend through the screw strip. The screw strip has a plurality of screw-holding strip portions for holding the screws respectively. Each of the screw-holding strip portions includes a strip body having a side surface, a pair of parallel first and second short ribs extending respectively and integrally from two opposite sides of the side surface of the strip body, and a plurality of resilient clamping arms extending from the side surface of the strip body for clamping a corresponding one of the screws thereamong. Any two adjacent first short ribs are interconnected integrally such that the first short ribs constitute cooperatively a first long rib extending along a full length of the screw strip. Any two adjacent ones of the second short ribs are also interconnected integrally such that the second short ribs constitute cooperatively a second long rib extending along the full length of the screw strip. Each of the screw-holding strip portions further has a pair of first and second wings extending respectively and integrally from the opposite sides of a corresponding one of the screw-holding strip portions away from each other and disposed respectively in proximity to the first and second short ribs of the corresponding one of the screw-holding strip portions. Any two adjacent ones of the first wings are spaced apart from each other so as to define a first positioning notch therebetween. Any two adjacent ones of the second wings are also spaced apart from each other so as to define a second positioning notch therebetween.

These and other features and advantages of this invention will become apparent in the following detailed description of the preferred embodiments of this invention, with reference to the accompanying drawings, in which:
Fig. 1 is a fragmentary perspective view of a first conventional screw strip;
Fig. 2 is an end view of the first conventional screw strip, illustrating the use thereof;
Fig. 3 is a perspective view of a second conventional screw strip;
Fig. 4 is a perspective view of the first preferred embodiment of a screw strip according to this invention;
Fig. 5 is a perspective view of the first preferred embodiment, illustrating the use thereof;
Fig. 6 is an end view of the first preferred embodiment, illustrating the use thereof;
Figs. 7 to 9 are respectively fragmentary top views of the second, third, and fourth preferred embodiments of a screw strip according to this invention, illustrating changes to the number of resilient clamping arms;
Figs. 10 to 13 are respectively fragmentary top views of the fifth, sixth, seventh, and eighth preferred embodiments of a screw strip according to this invention, illustrating changes to both the number and shape of the resilient clamping arms;
Fig. 14 is a fragmentary perspective view of the ninth preferred embodiment of a screw strip according to this invention; and
Fig. 15 is an end view of the ninth preferred embodiment, illustrating the use thereof.

Before the present invention is described in greater detail in connection with the preferred embodiments, it should be noted that similar elements and structures are designated by like reference numerals throughout the entire disclosure.

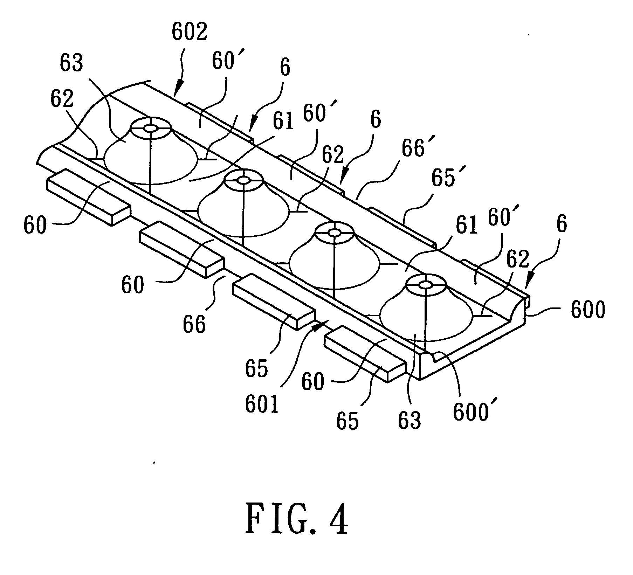

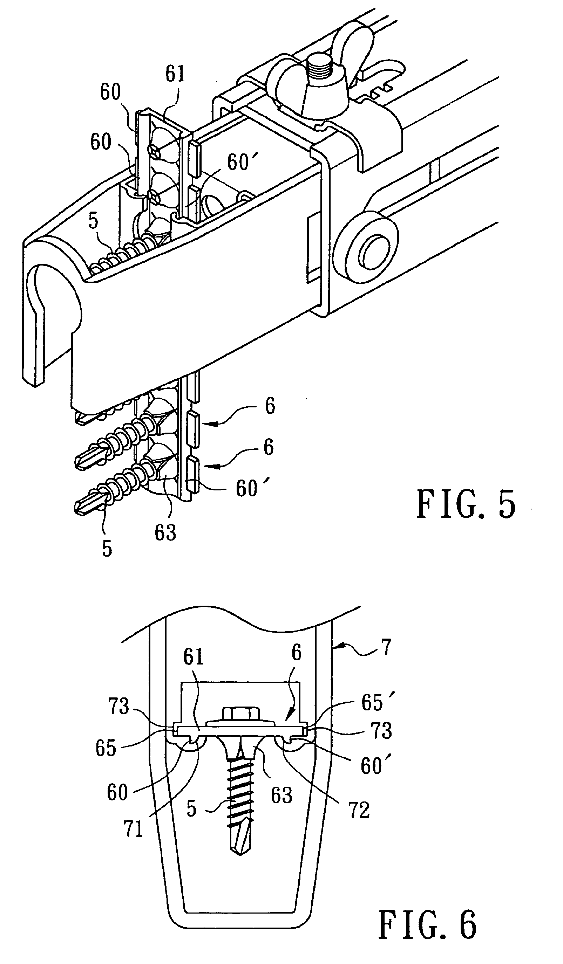

Referring to Fig. 4, the first preferred embodiment of a screw strip according to this invention has a plurality of screw-holding strip portions 6 for holding respectively a plurality of screws 5, as shown in Fig. 5. The screws 5 extend through the screw strip.

Each of the screw-holding strip portions 6 includes an annular strip body 61, a pair of parallel first and second short ribs 60, 60', four resilient clamping arms 63, and a pair of first and second wings 65, 65'. Any two adjacent clamping arms 63 define an axially extending slot 62 therebetween.

The screw strip is formed by extrusion using a plastic composite material comprised of a plastic material and paper pulp, and optionally sawdust, and is subsequently punched and pressed to form the clamping arms 63.

The screw-holding strip portions 6 are similar in construction. One of the screw-holding strip portions 6 is described in the succeeding paragraph.

The first and second short ribs 60, 60' extend respectively and integrally from two opposite sides of a side surface of the strip body 61. The clamping arms 63 extend from an inner periphery of the side surface of the strip body 61 for clamping the screw 5 thereamong. Any two adjacent first short ribs 60 are interconnected integrally such that the first short ribs 60 constitute cooperatively a first long rib 601, which extends along a full length of the screw strip and which is engageable with a first rib-engaging slot 71 in a pneumatic screw-driving device 7, as shown in Fig. 6. Any two adjacent second short ribs 60' are also interconnected integrally such that the second short ribs 60' constitute cooperatively a second long rib 602, which extends along the full length of the screw strip and which is engageable with a second rib-engaging slot 72 in the pneumatic screw-driving device 7. The first and second wings 65, 65' extend respectively and integrally from the opposite sides of the strip body 61 away from each other, and are disposed respectively in proximity to and outside of the first and second short ribs 60, 60'. The pneumatic screw-driving device 7 is formed with two aligned guide slots 73 for receiving respectively, fittingly, and slidably the first and second wings 65, 65'.

Any two adjacent first wings 65 are spaced apart from each other so as to define therebetween a first positioning notch 66, which is engageable with one spring-biased positioning member (not shown) of the pneumatic screw-driving device 7.

Any two adjacent second wings 65' are also spaced apart from each other so as to define therebetween a second positioning notch 66', which is engageable with another spring-biased positioning member of the pneumatic screw-driving device.

Since the first and second long ribs 601, 602 extend along a full length of the screw strip, they are long and possess no gaps. As such, removal of the first and second long ribs 601, 602 from the rib-engaging slots 71, 72 in the pneumatic screw-driving device 7 can be prevented. This allows the screws 5 to be driven accurately into a workpiece (not shown) by the pneumatic screw-driving device 7.

In this embodiment, each of the first and second short ribs 60, 60' has a flat outer side surface 600 perpendicular to the strip bodies 61 and a curved inner side surface 600' , and each of the first and second wings 65, 65' is configured as a plate parallel to the strip bodies 61.

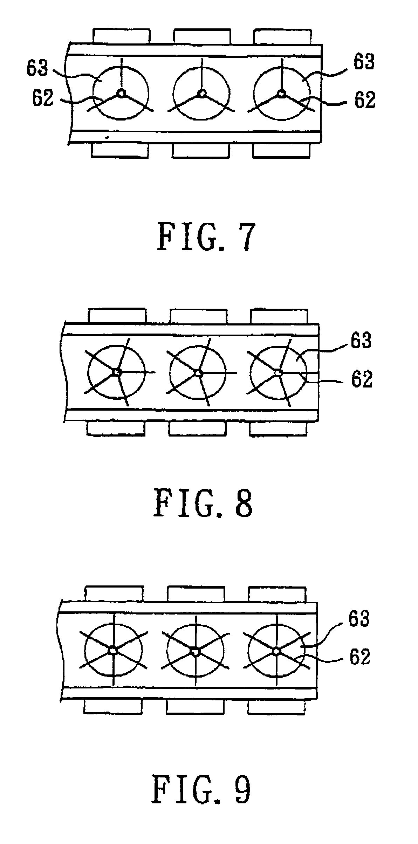

The number of the clamping arms 63 of each of the screw-holding strip portions 6 may be changed, as shown in Figs. 7 to 9.

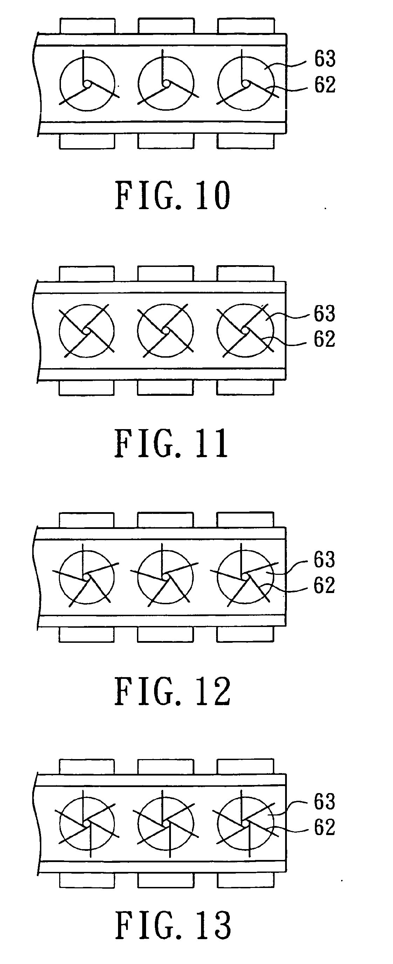

Alternatively, both the number and shape of the clamping arms 63 may be changed, as shown in Figs. 10 to 13.

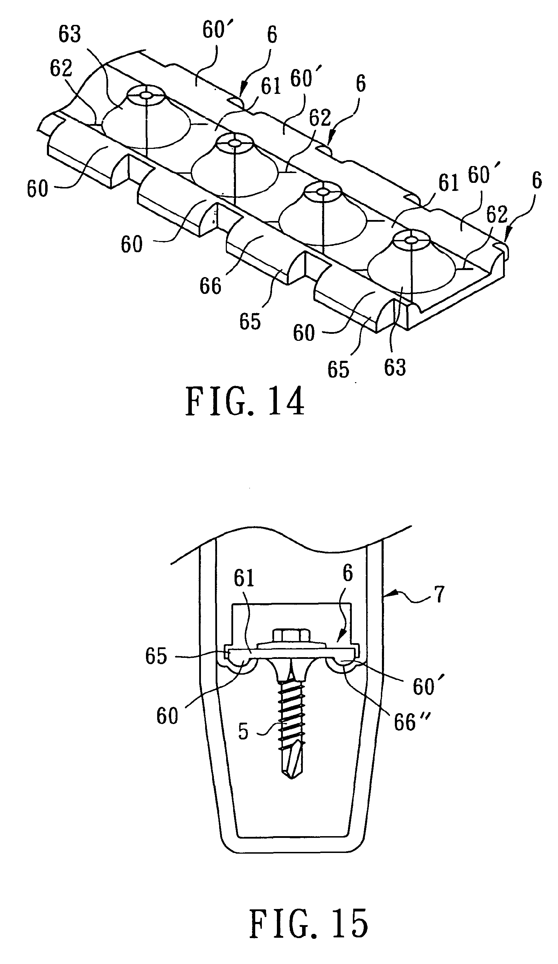

Referring to Figs. 14 and 15, the shape of an assembly of the first short rib 60 and the first wing 65 of each of the screw-holding strip portions 6 may be changed to have a curved top surface 66" extending from the first short rib 60 to the first wing 65. Such shape change may also be made to an assembly of the second short rib 60' and the second wing 65' of each of the screw-holding strip portions 6.

## Claims

1. A screw strip for holding a plurality of screws (5), the screws (5) extending through the screw strip, the screw strip having a plurality of screw-holding strip portions (6) for holding respectively the screws (5), each of the screw-holding strip portions (6) comprising:
strip body (61) having a side surface;
a pair of parallel first and second short ribs (60, 60') extending respectively and integrally from two opposite sides of the side surface of the strip body (61); and
a plurality of resilient clamping arms (63) extending from the side surface of the strip body (61) for clamping a corresponding one of the screws (5) thereamong;
any two adjacent ones of the first short ribs (60) are interconnected integrally such that the first short ribs (60) constitute cooperatively a first long rib (601) extending along a full length of the screw strip, any two adjacent ones of the second short ribs (60') being also interconnected integrally such that the second short ribs (60') constitute cooperatively a second long rib (602) extending along the full length of the screw strip, **characterized in that** each of the screw-holding strip portions (6) further having a pair of first and second wings (65, 65') extending respectively and integrally from the opposite sides of the strip body (61) away from each other and disposed respectively in proximity to the first and second short ribs (60, 60') of the corresponding one of the screw-holding strip portions (6), any two adjacent ones of the first wings (65) being spaced apart from each other so as to define a first positioning notch (66) therebetween, any two adjacent ones of the second wings (65') being also spaced apart from each other so as to define a second positioning notch (66') therebetween.

2. The screw strip as claimed in Claim 1, further **characterized in that** each of the first and second short ribs (60, 60') has a flat outer side surface (600) perpendicular to the strip bodies (61) and a curved inner side surface (600'), and each of the first and second wings (65, 65') is configured as a plate parallel to the strip bodies (61).

3. The screw strip as claimed in Claim 1, further **characterized in that** an assembly of the first short rib (60) and the first wing (65) of each of the screw-holding strip portions (6) has a curved top surface (66") extending from the first short rib (60) to the first wing (65), and an assembly of the second short rib (60') and the second wing (65') of each of the screw-holding strip portions (6) also has a curved top surface extending from the second short rib (60') to the second wing (65').

## Patentansprüche

1. Schraubenband zum Halten mehrerer Schrauben (5), wobei die Schrauben (5) durch das Schraubenband verlaufen, wobei das Schraubenband mehrere Schraubenhaltebandabschnitte (6) zum jeweiligen Halten der Schrauben (5) aufweisen, wobei jeder der Schraubenhaltebandabschnitte (6) Folgendes umfasst:
einen Bandkörper (61) mit einer Seitenfläche;
ein Paar parallele erste und zweite kurze Rippen (60, 60'), die jeweils auf zwei gegenüberliegenden Seiten der Seitenfläche des Bandkörpers (61) angeformt verlaufen; und
mehrere elastische Klemmarme (63), die sich von der Seitenfläche des Bandkörpers (61) erstrecken, um eine entsprechende der Schrauben (5) zwischen sich festzuklemmen;
wobei beliebige zwei benachbarte der ersten kurzen Rippen (60) einstückig miteinander verbunden sind, so dass die ersten kurzen Rippen (60) zusammenwirkend eine erste lange Rippe (601) bilden, die über eine volle Länge des Schraubenbandes verläuft, wobei beliebige zwei benachbarte der zweiten kurzen Rippen (60') ebenfalls einstückig miteinander verbunden sind, so dass die zweiten kurzen Rippen (60') zusammenwirkend eine zweite lange Rippe (602) bilden, die über die volle Länge des Schraubenbandes verläuft, **dadurch gekennzeichnet, dass** jeder der Schraubenhaltebandabschnitte (6) ferner ein Paar erste und zweite Flügel (65, 65') hat, die sich jeweils an den gegenüberliegenden Seiten des Bandkörpers (61) angeformt davon weg erstrecken und jeweils in der Nähe der ersten und der zweiten kurzen Rippe (60, 60') des entsprechenden einen der Schraubenhaltebandabschnitte (6) verlaufen, wobei beliebige zwei benachbarte der ersten Flügel (65) so voneinander beabstandet sind, dass eine erste Positionierungsnut (66) dazwischen definiert wird, wobei beliebige zwei benachbarte der zweiten Flügel (65') ebenfalls so voneinander beabstandet sind, dass eine zweite Positionierungsnut (66') dazwischen definiert wird.

2. Schraubenband nach Anspruch 1, ferner **dadurch gekennzeichnet, dass** jede der ersten und zweiten kurzen Rippen (60, 60') eine flache äußere Seitenfläche (600) lotrecht zu den Bandkörpern (61) und eine gekrümmte innere Seitenfläche (600') hat und jeder der ersten und zweiten Flügel (65, 65') als eine Platte parallel zu den Bandkörpern (61) konfiguriert ist.

3. Schraubenband nach Anspruch 1, ferner **dadurch gekennzeichnet, dass** eine Baugruppe aus der ersten kurzen Rippe (60) und dem ersten Flügel (65) jedes der Schraubenhaltebandabschnitte (6) eine gekrümmte Oberseite (66") hat, die von der ersten kurzen Rippe (60) zum ersten Flügel (65) verläuft, und eine Baugruppe aus der zweiten kurzen Rippe (60') und dem zweiten Flügel (65') jedes der Schraubenhaltebandabschnitte (6) auch eine gekrümmte Oberseite hat, die von der zweiten kurzen Rippe (60') zum zweiten Flügel (65') verläuft.

## Revendications

1. Bande porte-vis pour retenir une pluralité de vis (5), les vis (5) traversant la bande porte-vis, la bande porte-vis ayant une pluralité de parties de retenue de vis (6) pour retenir respectivement les vis (5), chacune des parties de retenue de vis (6) de la bande comprenant :
un corps de bande (61) ayant une surface latérale ;
une paire de premiers et deuxièmes rebords courts parallèles (60, 60') dépassant respectivement et
intégralement de deux côtés opposés de la surface latérale du corps de bande (61) ; et
une pluralité de bras de verrouillage élastiques (63) dépassant de la surface latérale du corps de bande (61) pour verrouiller entre eux une vis correspondante ;
deux rebords adjacents quelconques des premiers rebords courts (60) étant interconnectés intégralement de telle sorte que les premiers rebords courts (60) coopèrent pour constituer un premier rebord long (601) s'étendant sur toute la longueur de la bande porte-vis, deux rebords adjacents quelconques des deuxième rebords courts (60') étant aussi interconnectés intégralement de telle sorte que les deuxièmes rebords courts (60') coopèrent pour constituer un deuxième rebord long (602) s'étendant sur toute la longueur de la bande porte-vis, **caractérisée en ce que** chacune des parties de retenue de vis (6) de la bande possède en outre une paire de première et deuxième languettes (65, 65') dépassant respectivement et intégralement des côtés opposés du corps de bande (61) en s'éloignant l'une de l'autre et disposées respectivement à proximité des premier et deuxième rebords courts (60, 60') de la partie correspondante de retenue de vis (6) de la bande, deux languettes adjacentes quelconques des premières languettes (65) étant espacées l'une de l'autre de manière à définir entre elles une première encoche de positionnement (66), deux languettes adjacentes quelconques des deuxièmes languettes (65') étant aussi espacées l'une de l'autre de manière à définir entre elles une deuxième encoche de positionnement (66').

2. Bande porte-vis selon la revendication 1, **caractérisée en outre en ce que** chacun des premier et deuxième rebords courts (60, 60') a une surface latérale extérieure plate (600) perpendiculaire aux corps de bande (61) et une surface latérale intérieure incurvée (600'), et **en ce que** chacune des premières et deuxièmes languettes (65, 65') est configurée comme une plaque parallèle aux corps de bande (61).

3. Bande porte-vis selon la revendication 1, **caractérisée en outre en ce qu'**un ensemble du premier rebord court (60) et de la première languette (65) de chacune des parties de retenue de vis (6) de la bande a une surface supérieure incurvée (66") s'étendant du premier rebord court (60) à la première languette (65), et **en ce qu'**un ensemble du deuxième rebord court (60') et de la deuxième languette (65') de chacune des parties de retenue de vis (6) de la bande a aussi une surface supérieure incurvée s'étendant du deuxième rebord court (60') à la deuxième languette (65').
